# EUROPEAN PATENT SPECIFICATION

(11) **EP 3 021 461 B1**
(45) Date of publication and mention of the grant of the patent: **10.05.2017**
(21) Application number: 15150554.2
(22) Date of filing: 09.01.2015
(51) Int. Cl.: H02K 5/16, H02K 5/22, H02K 7/08, H02K 11/40, H02K 11/00

(54) **Electric motor**
Elektrischer Motor
Moteur électrique

(30) Priority: 14.11.2014 CN 201410649434
(43) Date of publication of application: 18.05.2016
(73) Proprietor: Guangdong Welling Motor Manufacturing Co., Ltd., Foshan, Guangdong 528311 (CN)
(72) Inventor: LI, Guoxiong, 518026 Shenzhen (CN); TANG, Jianwu, 528311 Foshan (CN); LI, Hu, 528311 Foshan (CN); LI, Wan, 528311 Foshan (CN); ZHOU, Qingjie, 528311 Foshan (CN)
(74) Representative: Zenz Patentanwälte Partnerschaft mbB

(56) References cited:
- EP-A1- 2 569 851
- EP-A2- 2 299 559
- CN-A- 102 969 859
- CN-U- 202 488 283
- US-A1- 2008 042 499
- US-A1- 2014 183 983

## Description

### TECHNICAL FIELD

The present invention relates to the motor field, in particular, to a motor.

### BACKGROUND

Traditional plastic sealed brushless direct current motor generally has a bearing electric erosion problem, in order to solve the technical problem, the existing technology provides a technical solution in which a conductive adhesive tape is disposed between two bearing supports. Specifically, two ends of the conductive adhesive tape are respectively connected to the two bearing supports, such that the two bearing supports are electronically connected through the conductive adhesive tape, which eases the bearing electrical erosion to some extent. However, this solution still has some defects in the specific application that: 1) the fixation reliability of the conductive adhesive tape is low if the conductive adhesive tape is fixed through the adhesion between the conductive adhesive tape and the bearing supports; 2) to achieve the adhesion between the conductive adhesive tape and bearing supports, it is necessary that the bearing supports have exposed portions and some operations are performed on the exposed portions, such as a cleaning operation on the exposed portions to remove oil contamination, the process of adhesion operation is complex; 3) after the motor run for a long time, the colloidal stability of the conductive adhesive tape reduces because of the maturing of the conductive adhesive tape, which causes the contact resistance of the conductive adhesive tape to increase or even causes the conductive adhesive tape to fall off, such that the electrical connection between the two bearing supports ceases to be effective, and finally the long-term effectiveness of the electrical connection between the two bearing supports can't be achieved.

The utility model with the number of announcement of grant of patent right CN202488283 (U) discloses a direct current motor with an electrolytic corrosion prevention structure. The direct current motor comprises a stator assembly and a rotating axis, wherein the stator assembly is arranged between a first side end cover and a second side end cover, the rotating axis penetrates out of the second side end cover, and an insulating fixed mount is arranged on the outer edge of the stator assembly, provided with a conducting plate electrically conducting the two side end covers, arranged on the stator assembly by a guide post arranged on the insulating fixed mount and provided with a fastener or a trough for installing the conducting plate. A connecting hole is formed on the first side end cover, and the conducting plate is provided with a through hole or a flanging hole which is electrically connected with the connecting hole. The conducting plate is provided with a bending part which is electrically connected with the second side end cover, thus enabling the first side end cover and the second side end cover to form an equipotential body, reducing voltage difference between a stator and a shaft, and effectively preventing a bearing from suffering from electrolytic corrosion.

The utility model with the number of announcement of grant of patent right CN102969859 (A) discloses an installation structure of a breakover plate of a direct current motor. The installation structure comprises an insulation fixing support and the breakover plate and is characterized in that at least a pair of buckles or clamping grooves is arranged on the insulation fixing support, the buckles or the clamping grooves correspond to each other, protruding sides are arranged on two sides of the breakover plate, and the protruding sides of the breakover plate are embedded in the buckles or the clamping grooves of the insulation fixing support to enable the breakover plate to be installed on the insulation fixing support.

### SUMMARY

The present invention aims at overcoming the detects existing in the prior art, provides a motor with simple structure, thereby ensuring the long-term effectiveness of the electrical connection between the two bearing supports.

To achieve the above purpose, the technical solution of the present invention is a motor comprising a stator assembly a circuit board, and a first bearing support and a second bearing support respectively disposed on two sides of the stator assembly, the motor further comprises an insulating support mounted on the stator assembly and a metal conduction member fixed on the insulating support and with two ends connected to the first bearing support and the second bearing support respectively, the insulating support is provided with a positioning column, the circuit board is provided with a positioning hole, the circuit board is supported by the insulating support, and the positioning column is disposed in the positioning hole.

Specifically, the metal conduction member comprises: a first conduction part electrically connected to the first bearing support, a second conduction part electrically connected to the second bearing support, a connecting part connected between the first conduction part and the second conduction part, both of the connecting part and the first conduction part are connected to the insulating support.

Specifically, the insulating support comprises: a support body connected to the stator assembly, a support plate disposed on a side portion of the support body for supporting the connecting part and a locking part configured to lock and fix the connecting part on the support plate, the first conduction part is buckled to one end of the support plate, and the positioning column protrudes from the top of the support body.

Specifically, the metal conduction member is fixed on the insulating support through insert injection molding, the locking part comprises two side plates bended and extending from two sides of the support plate and a cover board connected between the two side plates and opposite to a bottom plate, the support plate, the two side plates and the cover board are jointed together to form a accommodating cavity, the connecting part comprises a package part packed and fixed in the accommodating cavity.

Alternatively, the metal conduction member is buckled to connected to the insulating support, the locking part acts as a buckle structure disposed on the support plate.

Specifically, the buckle structure comprises at least two bend parts which are bended and respectively disposed on edges of the two ends of the support plate and a embossment protruding from the central part of the support plate, flanges protruding from two edges of the metal conduction member are formed and correspond to the bend parts, each bend part is buckled to the flange, a buckle hole passing through the central part of the metal conduction member is formed and corresponds to the embossment, the embossment is matched with the buckle hole.

Specifically, the second bearing support comprises a bearing support sleeve and a chassis protruding from one end of the bearing support sleeve, a connecting hole configured to be connected with the chassis through rivet connection or through a screw is disposed on the second conduction part.

As not part of invention , an end of the second conduction part may be provided with a curved surface closely matched with a side surface of the bearing support sleeve; or the second conduction part is provided with a buckle buckled to an edge of the chassis.

Furthermore, an outer periphery of the positioning column is provided with an annular boss, an annular groove is formed between the annular boss and the positioning column, the circuit board is supported by the annular boss.

Specifically, the stator assembly compromises a stator core, an insulating frame disposed on the stator core and a stator wind winding the insulating frame, the insulating frame is provided with an inserting hole, the insulating support is provided with an inserting block corresponding to the inserting hole, the inserting block is matched with the inserting hole through insertion.

In the motor of the present invention, the first bearing support and the second bearing support are electrically connected together through the metal conduction member, which achieves the electric connection between the first bearing support and the second bearing support effectively, thereby avoiding electric erosion of the bearings; and because the metal conduction member is made of metal material, the conductivity performance of the metal conduction member is good, thereby ensuring the long-term effectiveness of the electrical connection between the first bearing support and the second bearing support. Meanwhile, by mounting a insulating support on the stator assembly to lock and fix the metal conduction member, the fixation reliability of the metal conduction member may be ensure effectively, and the mounting of the metal conduction member doesn't need to clean the oil contamination and implement other operation, the assembly procedure is simple and it is convenient to operation. Furthermore, the circuit board is supported by the insulating support and the circuit board is positioned through the insertion match of the positioning column and the positioning hole, such that the insulating support not only can fix the metal conduction member, but also can support and position the circuit board, thereby reducing the quantity of the components in the motor.

### BRIEF DESCRIPTION OF THE DRAWINGS

FIG. 1 is a schematic cross-section view of the motor according to an embodiment of the present invention;
FIG. 2 is a schematic view of an assembly structure of a stator assembly, first bearing support, insulating support and metal conduction member according to an embodiment of the present invention;
FIG. 3 is a left view of the assembly structure in FIG. 2.
FIG. 4 is a schematic view of an assembly structure wherein a stator assembly, first bearing support, insulating support and metal conduction member are housed in a plastic housing according to an embodiment of the present invention;
FIG. 5 is a left view of the assembly structure in FIG. 4.
FIG. 6 is a first schematic perspective view of the metal conduction member fixed on the insulating support through insert injection molding according to an embodiment of the present invention;
FIG. 7 is a second schematic perspective view of the metal conduction member fixed on the insulating support through insert injection molding according to an embodiment of the present invention;
FIG. 8 is a schematic perspective view of the metal conduction member fixed on the insulating support through buckle connection according to an embodiment of the present invention;
FIG. 9 is a schematic perspective view of the insulating support in FIG. 8.
FIG. 10 is a bottom view of the insulating support in FIG. 9.
FIG. 11 is a schematic view of a matching structure of the second conduction part and the second bearing support according to an embodiment which is not part of the present invention;
FIG. 12 is a bottom view of the matching structure in FIG. 11.
FIG. 13 is a schematic view of another matching structure of the second conduction part and the second bearing support according to an embodiment of the present invention;
FIG. 14 is a bottom view of the matching structure in FIG. 13;
FIG. 15 is a schematic structure view of the first bearing support according to an embodiment of the present invention;
FIG. 16 is a schematic structure view of the second bearing support according to an embodiment of the present invention.

### DETAILED DESCRIPTION

To make the objectives, technical solutions and advantages of the present invention clearer, the present invention will be further described hereafter with reference to the accompany drawings and embodiments. It shall be understood that, the embodiments described herein are only intended to illustrate but not to limit the present invention.

It should be note that when one component refers to "be fixed on" or "be disposed on" another component, the component may be on the component directly or there may be a mediate component between the two components. It should note that when one component refers to "be connected to" another component, the component may be connected to another component directly or there may be a mediate component between the two components. There is another thing to be note that, left, right, up, down, top and bottom and other orientation words in the embodiments, are only the relative concepts or use the normal use state of the products as a reference, and should not be considered to be restrictive.

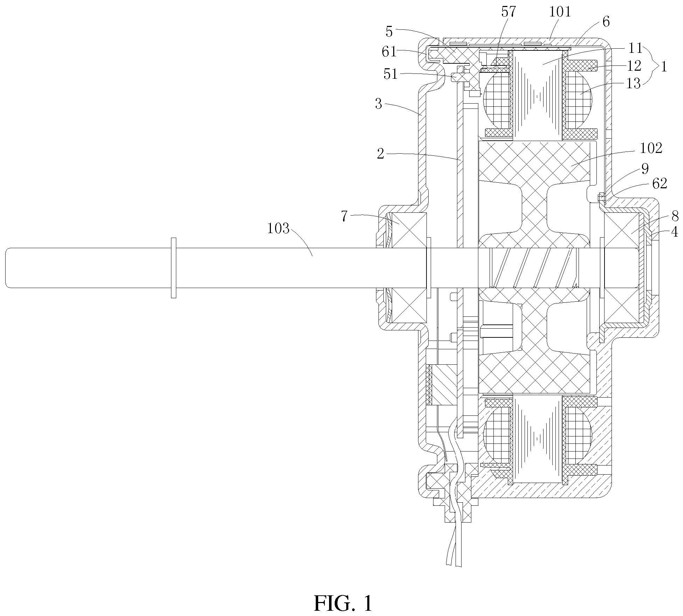

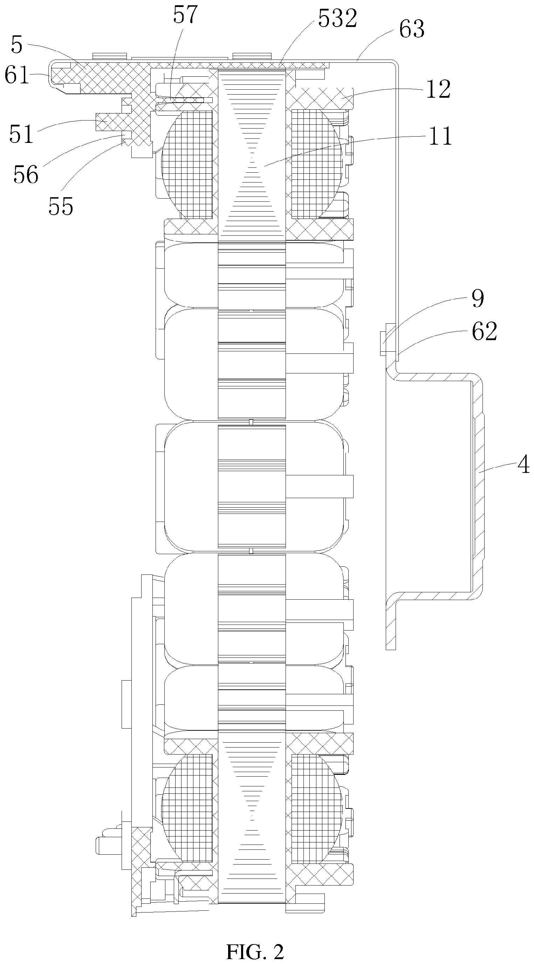

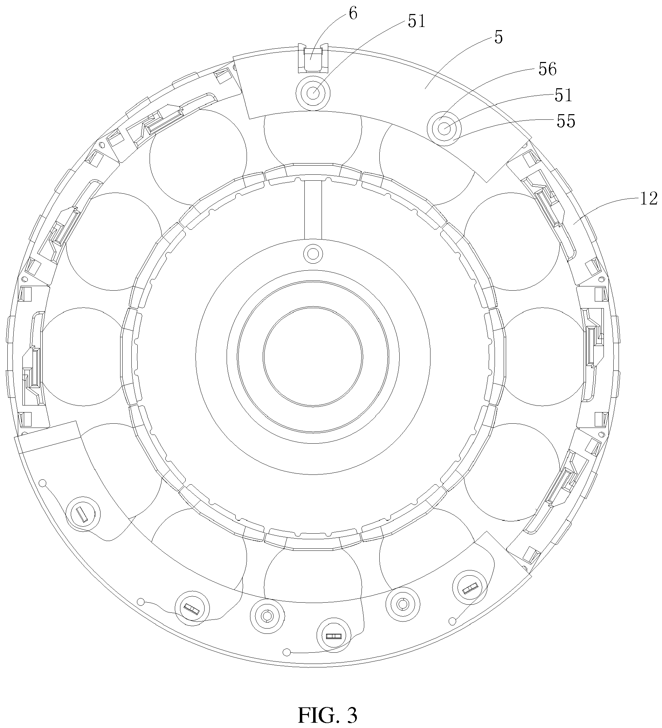

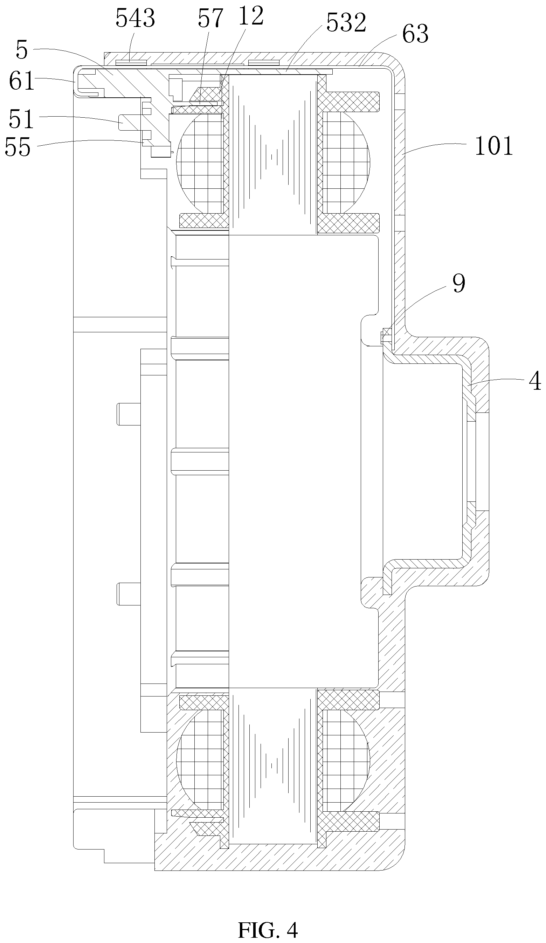

Referring to FIGS. 1-4, a motor according to an embodiment of the present invention comprises a stator assembly 1, a circuit board 2, and a first bearing support 3 and a second bearing support 4 respectively disposed on two sides of the stator assembly 1. The motor also comprises an insulating support 5 mounted on the stator assembly 1 and a metal conduction member 6 fixed on the insulating support 5 and with two ends connected to the first bearing support 3 and the second bearing support 4 respectively, the insulating support 5 is provided with positioning columns 51, the circuit board 2 is provided with a positioning hole, the circuit board 2 is supported by the insulating support 5, and the positioning column 51 is disposed in the positioning hole, that is the circuit board 2 supported by the insulating support 5 is passed through by the positioning columns 51. The first bearing support 3 and the second bearing support 4 are electrically connected together through the metal conduction member 6, which achieves the electric connection between the first bearing support 3 and the second bearing support 4 effectively, thereby avoiding electric erosion of the bearings; and because the metal conduction member 6 is made of metal material, the conductivity performance of the metal conduction member 6 is good, thereby ensuring the long-term effectiveness of the electrical connection between the first bearing support 3 and the second bearing support 4. Meanwhile, through the insulating support 5, on one hand metal conduction member 6 is locked and fixed, thereby ensuring the fixation reliability of the metal conduction member 6 connected between the first bearing support 3 and the second bearing support 4, and the mounting of the metal conduction member 6 doesn't need to clean the oil contamination and implement other operations, the assembly procedure is simple and it is convenient to operate. Furthermore, the circuit board 2 is supported by the insulating support 5 and the circuit board 2 is positioned through the insertion match of the positioning column 51 and the positioning hole, such that the insulating support 5 not only can fix the metal conduction member 6, but also can support and position the circuit board 2, thereby reducing the quantity of the components in the motor.

The motor according to the embodiment of the present invention is mainly applied to plastic package brushless DC motor and can avoid bearing electric erosion in the brushless DC motor. Specifically, as shown in FIGS. 1-4, the motor according to the embodiment of the present invention, further comprises a rotation shaft 103, a rotor 102, a first bearing 7, a second bearing 8 and a plastic housing 102. The first bearing support 3 is provided with a first bearing cavity 30 for accommodating the first bearing 7, and the second bearing support 4 is provided with a second bearing cavity 40 for accommodating the second bearing 8. The first bearing 7 is mounted in the first bearing cavity 30 of the first bearing support 3, the second bearing 8 is mounted in the second bearing cavity 40 of the second bearing support 4, and the rotor 102, first bearing 7 and the second bearing 8 are mounted on the rotation shaft 103. The rotor 102 is inserted in the stator assembly 1. The stator assembly 1, the first bearing support 3, the insulating support 5 and the metal conduction member 6 are housed by the plastic housing 101.

Specifically, insulating support 5 is formed by injecting the malleable insulation plastic material, such as nylon or PBT, which facilitates isolating the metal conduction member 6 and the stator assembly 1 to avoid the electric connection between the metal conduction member 6 and the stator assembly 1.

Specifically, as shown in FIG. 1 and FIGS. 6-8, the metal conduction member 6 comprises a first conduction part 61 electrically connected to the first bearing support 3, a second conduction part 62 connected to the second bearing support 4 and a connecting part 63 connected between the first conduction part 61 and the second conduction part 62, the connecting part 63 and the first conduction part 61 are connected to the insulating support 5. In this embodiment, the connecting part 63 is L-shaped, the first conduction part 61 and the second conduction part 62 are disposed on two ends of the L-shaped structure respectively, which may ensure that the first conduction part 61 and the second conduction part 62 extend to connect with the first bearing support 3 and the second bearing support 4 respectively, and make the connecting part 63 have simple structure and easy to be manufactured. The connecting part 63 and the first conduction part 61 are connected to the insulating support 5, such that the metal conduction member 6 is locked and fixed on the insulating support 5, thereby preventing the metal conduction member 6 from loosening and shifting which appear after the assembly is finished.

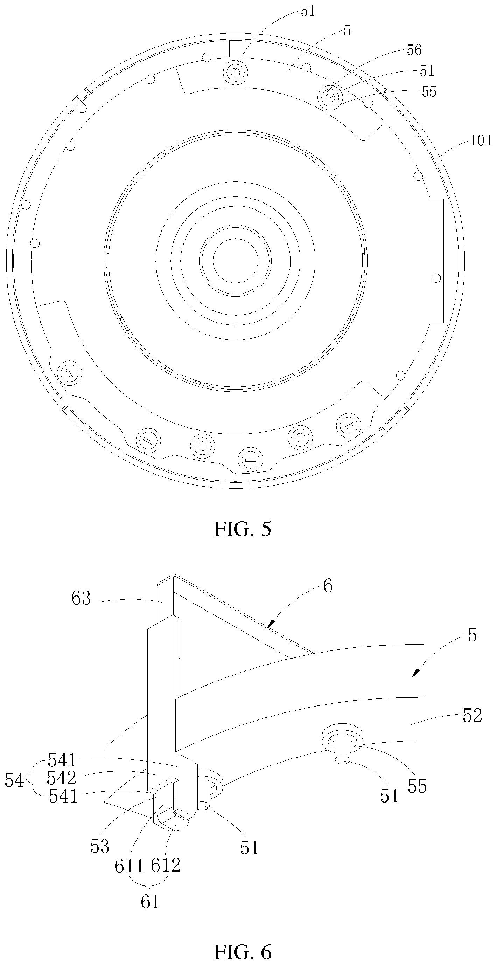

Specifically, as shown in FIGS. 6-9, the insulating support 5 comprises a support body 52 connected to the stator assembly 1, a support plate 53 disposed on a side portion of the support body 52 for supporting the connecting part 63 and a locking part 54 configured to lock and fix the connecting part 63 on the support plate 53, the first conduction part 61 is buckled to one end of the support plate 53, and the positioning columns 51 protrude from the top of the support body 52. The support plate 53 comprises a top projecting part 531 protruding from the top of the support body 52 and a bottom projecting part 532 protruding from the bottom of the support body 52, the protruding arrangement of the top projecting part 531 and the bottom projecting part 532 may ensure the reliability of that the support plate 53 supports the metal conduction member 6. And the bottom projecting part 532 may isolate the metal conduction member 6 from the stator core 11 effectively, which prevents the metal conduction member 6 from electrically connecting the stator core 11.

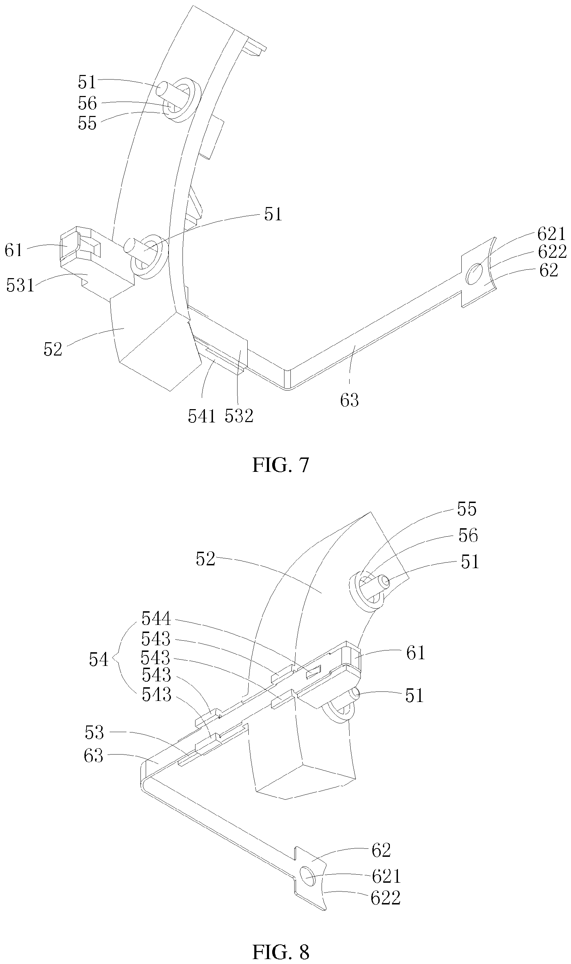

Specifically, as shown in FIGS. 6 and 7, the metal conduction member 6 is fixed on the insulating support 5 through insert injection molding, the locking part 54 comprises two side plates 541 bended and extending along two sides of the support plate 53 and a cover board 542 connected between the two side plates 541 and opposite to a bottom plate, the two side plates 541 and the cover board 542 are jointed together to form a accommodating cavity, the connecting part 63 comprises a package part packed and fixed in the accommodating cavity. The insert injection molding refers to putting an insert formed by different material (such as the metal conduction member 6 in this embodiment) processed in advance in the mould firstly, and injecting plastic material to the mould to form a solidified plastic part (such as the insulating support 5 in this embodiment) connected to the insert formed by different material. The metal conduction member 6 is fixed on the insulating support 5 through insert injection molding, such that the metal conduction member 6 is fixed on the insulating support 5 reliably, thereby preventing the metal conduction member 6 from loosening and shifting which appear during the plastic housing is formed through plastic molding. And because the metal conduction member 6 is connected to the insulating support 5 during the plastic injecting molding procedure of the insulating support 5, the connecting process for the metal conduction member 6 and the insulating support 5 is omitted, which facilitates improving the production efficiency of the motor. In this embodiment, the first conduction part 61 is L-shaped, and comprises a first straight part 611 extending straightly from one end of the connecting part 63 and a first folding part 612 extending along the first straight part 611 in a bending mode, the first folding part 12 is buckled on the top end of the support plate 53, which facilitates the connection reliability between the metal conduction member 6 and the insulating support 5.

Alternatively, as shown in FIGS. 8-10, as the alternative solution of that the metal conduction member 6 is fixed on the insulating support 5 through insert injection molding, the metal conduction member 6 is buckled to the insulating support 5, and the locking part 54 acts as a buckle structure disposed on the support plate 53. The buckle connection between the buckle structure and the metal conduction member 6 can make the metal conduction member 6 locked and fixed on the insulating support 5 effectively. Specifically, the buckle structure comprises at least two bend parts 543 which are bended and respectively disposed on edges of the two ends of the support plate 53 and a embossment 544 protruding from the central part of the support plate 53, flanges 64 corresponding to the bend parts 543 protrude from two edges of the metal conduction member 6. Each bend part 543 is buckled to be connected to the respective flange 64, a buckle hole 65 passing through the central part of the metal conduction member 6 is defined and corresponds to the embossment 544, the embossment 544 is matched with the buckle hole 65. Any one of the bend parts 543 is jointed with the support plate 53 to from a buckle groove 545; the respective flange 64 is buckled to the respective buckle groove 545. In this embodiment, there are four bend parts 543, and the four bend parts 543 are arranged oppositely in pairs on two side edges of the support plate 5. Therefore, it facilitates ensuring the reliability of the buckle connection between the metal conduction member 6 and the insulating support 5 and ensuring the uniformity of stress distribution of the buckle connection between the metal conduction member 6 and the insulating support 5, thereby preventing the metal conduction member 6 from loosening and shifting which appear during the plastic housing 101 is formed through plastic molding. In this embodiment, the first conduction part 61 is U-shaped, and comprises a second straight part 613 extending straightly from one end of the connecting part 63, a second folding part 614 extending along the second straight part 613 in a bending mode and a third folding part 615 extending along the second folding part 614 in a bending mode, the first folding part 612 parallels the third folding part 615, the second folding part 614 is buckled on the top end of the support plate 53, the second straight part 613 and a third straight part closely contact two sides of the support plate 53 respectively, which facilitates the connection reliability between the metal conduction member 6 and the insulating support 5. Preferably, two side edges of the top end of the support plate 53 are respectively provided with a first avoiding groove 533 and a second avoiding groove 534, thereby facilitating buckling the first conduction part 61 to the end of the support plate 53, and ensuring that the first conduction part 61 is closely buckled to the support plate 53.

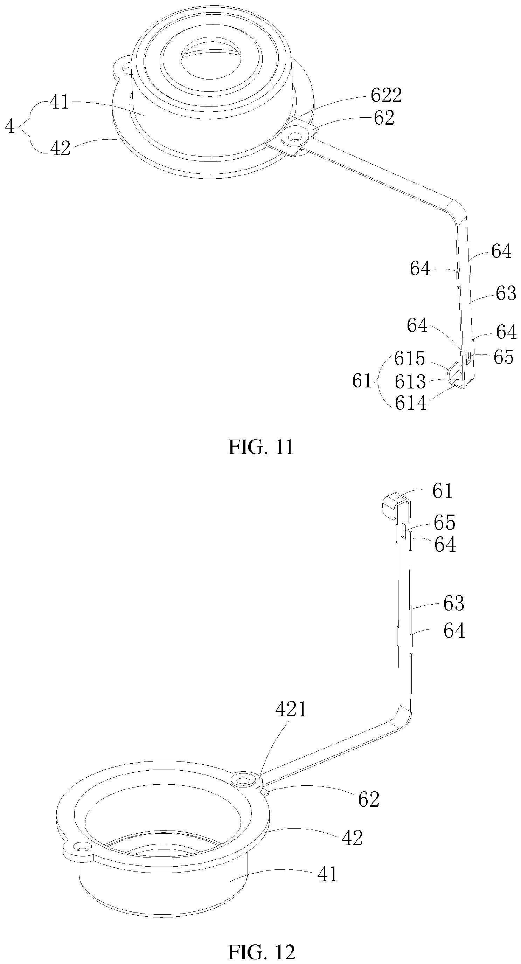

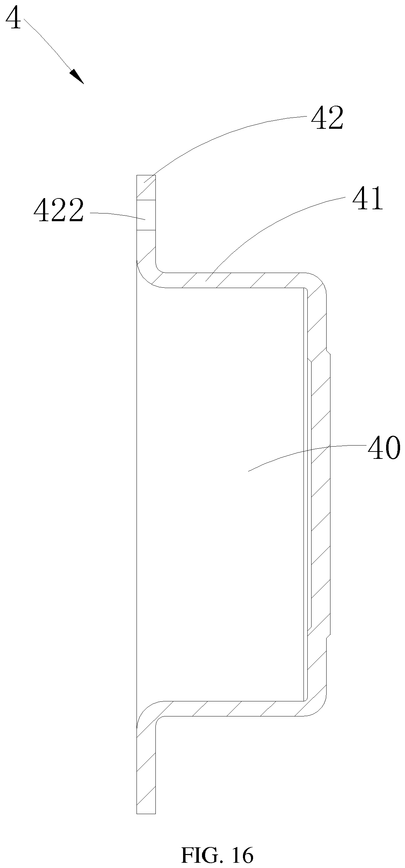

Specifically, as shown in FIGS. 11-14 and 16, the second bearing support 4 comprises a bearing support sleeve 41 and a chassis 42 protruding from one end of the bearing support sleeve 41, a connecting hole 621 configured to be connected with the chassis 42 through rivet connection or a screw is disposed on the second conduction part 62. The chassis 42 is provided with a though hole (not shown) to be inserted by a rivet 9. When assembled the rivet 9 is inserted into the through hole and the connecting hole 621 and riveted to the through hole and the connecting hole 621, the connection has high fixing reliability and the riveting operation is simple and convenient to implement. In the specific application, the second conduction part 62 may be connected to the second bearing support 4 through a screw or in a welding manner.

Specifically, as shown in FIGS. 11 and 12, but not being part of invention, an end of the second conduction part 62 is provided with a curved surface 622 closely matched with a side surface of the bearing support sleeve 41; there are at least two contact points between the curved surface 622 and the bearing support sleeve, and the at least two contact points may prevent the second conduction part 62 and the second bearing support 4 from rotating with respect to each other, thereby ensuring the reliability of connection between the second conduction part 62 and the second bearing 8. In this embodiment, the outer edge of the chassis 42 is provided with a convex lug 421, the second conduction part 62 is riveted to the convex lug 421.

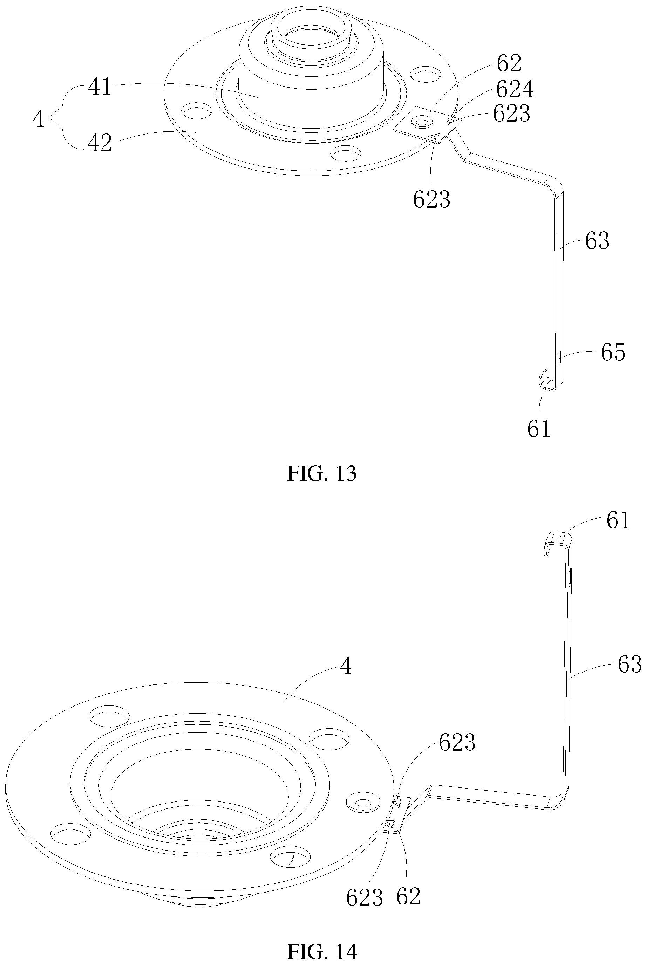

According to the invention, as shown in FIGS. 13 and 14, as an alternative solution of the curved surface 622, the second conduction part 62 is provided with a buckle 623 buckled to the edge of the chassis 42, specifically, in this embodiment, there are two buckles, the second conduction part 62 is provided with two through holes 624, the two buckles 623 are bended and extended outward along an inner edge of the two through holes 624. Therefore, through the buckle connection between the buckle 623 and the edge of the chassis 42, the relative rotation between the second conduction part 62 and the second bearing support 4 can be prevented, such that the connection reliability of the second conduction part 62 and the second bearing 8 may be ensured.

In the specific application, the metal conduction member 6 may be formed in a whole through punching, the processing procedure is simple, which facilitates large production of the metal conduction member 6.

Specifically, as shown in FIGS. 1 and 6-9, an outer periphery of the positioning column 51 is provided with an annular boss 55, an annular groove 56 is formed between the annular boss 55 and the positioning column 51, the circuit board 2 is supported by the annular boss 55. During injecting molding, a transition fillet is formed at the transition joint between the positioning column 51 and the support body 52, so the transition fillet make the support body 52 have unsmooth top surface, and disposing the annular groove 56 may avoid the transition fillet effecting on the smoothness of assembling the circuit board 2.

Specifically, as shown in FIGS. 1-4 and 10, the stator assembly 1 compromises a stator core 11, an insulating frame 12 disposed on the stator core 11 and a stator wind 13 winding the insulating frame 12, the insulating frame 12 is provided with an inserting hole (not shown), the insulating support 5 is provided with an inserting block 57 corresponding to the inserting hole, the inserting block 57 is matched with the inserting hole through insertion. The inserting block 57 is disposed on the bottom of the support body 52. Preferably, the quantity of both of the inserting block 57 and the inserting hole is two, thereby ensuring the connection reliability of the insulating support 5 and the insulating frame 12.

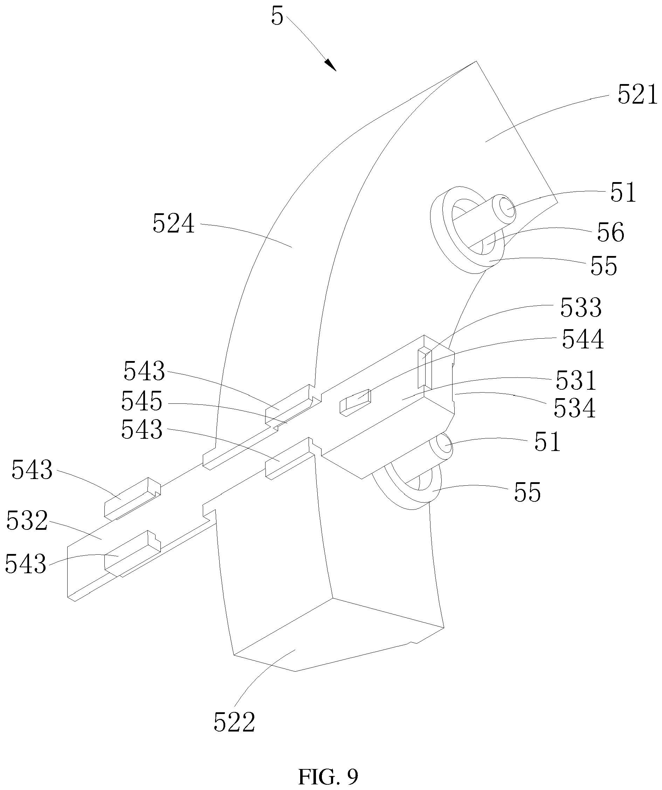

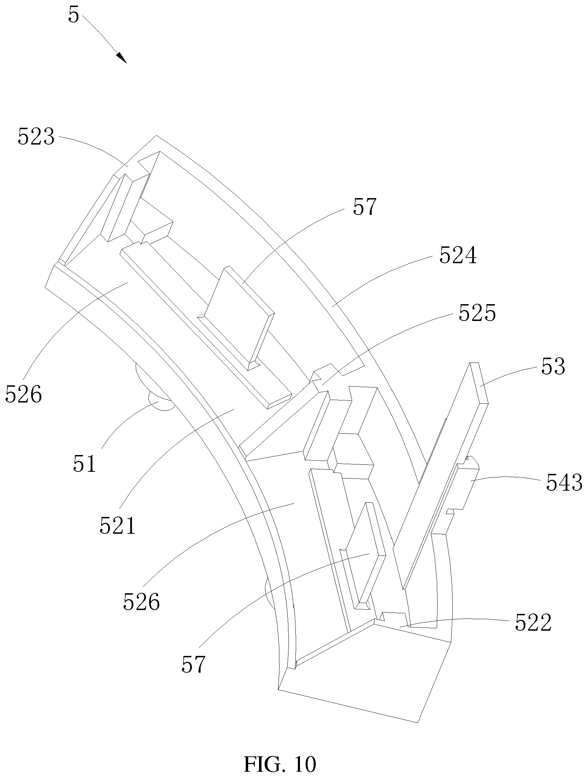

Specifically, as shown in FIGS. 9 and 10, the support body 5 further comprises a support plate 521, an outer plate 524 disposed on the outer edge of the support plate 521 and contacting closely with the outer edge of the insulating frame 12, a clapboard 525 protruding from the central portion of the support plate 521, a first end plate 522 disposed on an edge of one end of the support plate 521 and a second end plate 523 disposed on the edge of the other end of the support plate 521. The support plate 521 and the outer plate 524 are arc-shaped plates. All of the outer plate 524, the clapboard 525, the first end plate 522, the second end plate 523 and inserting plates protrude from the bottom of the support plate 521, and the outer plate 524, first end plate 522, second end plate 523 and support plate 521 are jointed together to form a cavity, the clapboard 525 divides the cavity into two sub-cavities 526, two inserting plates protrude from the two sub-cavities 526 respectively. The insulating frame 12 is correspondingly provided with a first matching groove (not shown) matched with the first end plate 522 in a insertion manner, a second matching groove (not shown) matched with the second end plate 523 in a insertion manner and a third matching groove (not shown) matched with the clapboard 525 in a insertion manner, such that the connection reliability between the insulating support 5 and the insulating frame 12 may be ensured further through the insertion match between the first end plate 522 and the first matching groove, the insertion match between the second end plate 523 and the second matching groove, and the insertion match between the clapboard 525 and the third matching groove, thereby facilitating preventing the insulating support 5 from loosening and shifting which appear during the plastic housing 101 is formed through plastic molding.

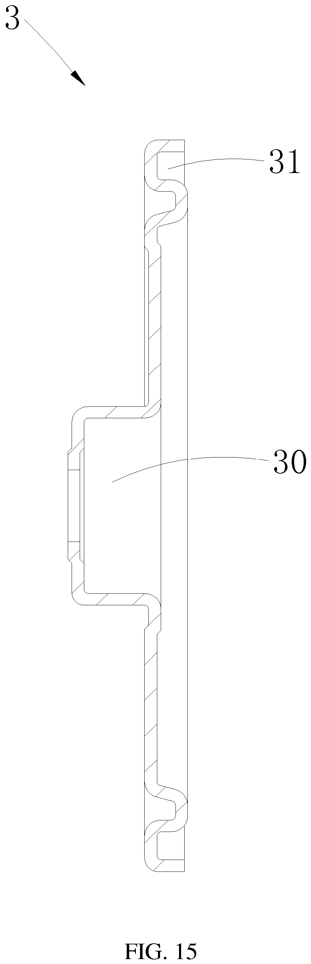

Specifically, as shown in FIGS. 1 and 15, a positioning groove 31 corresponding to the first conduction part 61 is concavely disposed in the side portion of the first bearing support 3 facing to the stator assembly 1, the first conduction part 61 is inserted in the positioning groove 31. Preferably, the insertion match between the first conduction part 61 and the positioning groove 31 is interference fit, which can not only implement the electric connection between the first conduction part 61 and the first bearing support 3, but also ensure the connection reliability between the first conduction part 61 and the first bearing support 3.

## Claims

1. A motor comprising a stator assembly (1), a circuit board (2), and a first bearing support (3) and a second bearing support (4) respectively disposed on two sides of the stator assembly (1), the motor further comprises an insulating support (5) mounted on the stator assembly (1) and a metal conduction member (6) fixed on the insulating support (5) and with two ends connected to the first bearing support (3) and the second bearing support (4) respectively, the insulating support (5) is provided with a positioning column (51), the circuit board (2) is provided with a positioning hole, the circuit board (2) is supported by the insulating support (5), and the positioning column (51) is disposed in the positioning hole, the metal conduction member (6) comprises a first conduction part (61) electrically connected to the first bearing support (3), a second conduction part (62) electrically connected to the second bearing support (4), a connecting part (63) connected between the first conduction part (61) and the second conduction part (62), both of the connecting part (63) and the first conduction part (61) are connected to the insulating support (5), the second bearing support (4) comprises a bearing support sleeve (41) and a chassis (42) protruding from one end of the bearing support sleeve (41), a connecting hole (621) configured to be connected with the chassis (42) through rivet connection or through a screw is disposed on the second conduction part (62), **characterized in that** an end of the second conduction part (62) is provided with two buckles (623) buckled to an edge of the chassis (42) and said end of the second conduction part (62) is provided with two through holes (624), wherein the two buckles (623) are bended and extended outward along an inner edge of the two through holes (624).

2. The motor of claim 1, **characterized in that**, the insulating support (5) comprises a support body (52) connected to the stator assembly (1), a support plate (53) disposed on a side portion of the support body (52) for supporting the connecting part (63) and a locking part (54) configured to lock and fix the connecting part (63) on the support plate (53), the first conduction part (61) is buckled to one end of the support plate (53), and the positioning column (51) protrudes from the top of the support body (52).

3. The motor of claim 2, **characterized in that**, the metal conduction member (6) is fixed on the insulating support (5) through insert injection molding, the locking part (54) comprises two side plates (541) bended and extending from two sides of the support plate (53) and a cover board (542) connected between the two side plates (541) and opposite to a bottom plate, the support plate (53), the two side plates (541) and the cover board (542) are jointed together to form a accommodating cavity, the connecting part (63) comprises a package part packed and fixed in the accommodating cavity.

4. The motor of claim 3, **characterized in that**, the metal conduction member (6) is buckled to the insulating support (5), and the locking part (54) acts as a buckle structure disposed on the support plate (53).

5. The motor of claim 4, **characterized in that**, the buckle structure comprises at least two bend parts (543) which are bended and respectively disposed on edges of the two ends of the support plate (53) and a embossment (544) protruding from the central part of the support plate (53), flanges (64) protruding from two edges of the metal conduction member (6) are formed and correspond to the bend parts (543), each bend part (543) is buckled to the flange (64), a buckle hole (65) passing through the central part of the metal conduction member (6) is formed and corresponds to the embossment (544), the embossment (544) is matched with the buckle hole.

6. The motor of any of claims 1-5, **characterized in that**, an outer periphery of the positioning column (51) is provided with an annular boss (55), an annular groove (56) is formed between the annular boss (55) and the positioning column (51), the circuit board (2) is supported by the annular boss (55).

7. The motor of any of claims 1-5, **characterized in that**, the stator assembly (1) compromises a stator core (11), an insulating frame (12) disposed on the stator core (11) and a stator wind winding the insulating frame (12), the insulating frame (12) is provided with an inserting hole, the insulating support (5) is provided with an inserting block (57) corresponding to the inserting hole, the inserting block (57) is matched with the inserting hole through insertion.

## Patentansprüche

1. Motor, umfassend eine Statoranordnung (1), eine Grundplatine (2) sowie einen ersten Lagerträger (3) und einen zweiten Lagerträger (4), die jeweils an zwei Seiten der Statoranordnung (1) angeordnet sind, wobei der Motor ferner einen isolierenden Träger (5), der an der Statoranordnung (1) montiert ist, und ein metallisches Leitungselement (6) umfasst, das am isolierenden Träger (5) befestigt ist und mit zwei Enden mit dem ersten Lagerträger (3) bzw. dem zweiten Lagerträger (4) verbunden ist, wobei der isolierende Träger (5) mit einer Positionierungssäule (51) versehen ist, die Grundplatine (2) mit einem Positionierungsloch versehen ist, die Grundplatine (2) durch den isolierenden Träger (5) getragen wird und die Positionierungssäule (51) im Positionierungsloch angeordnet ist, wobei das metallische Leitungselement (6) einen ersten Leitungsteil (61), der mit dem ersten Lagerträger (3) elektrisch verbunden ist, einen zweiten Leitungsteil (62), der mit dem zweiten Lagerträger (4) elektrisch verbunden ist, einen Verbindungsteil (63), der zwischen den ersten Leitungsteil (61) und den zweiten Leitungsteil (62) geschaltet ist, umfasst, wobei sowohl der Verbindungsteil (63) als auch der erste Leitungsteil (61) mit dem isolierenden Träger (5) verbunden sind, wobei der zweite Lagerträger (4) eine Lagerträgerhülse (41) und einen Rahmen (42) aufweist, der von einem Ende der Lagerträgerhülse (41) vorsteht, wobei ein Verbindungsloch (621), das dafür ausgelegt ist, mit dem Rahmen (42) durch eine Nietverbindung oder durch eine Schraube verbunden zu werden, an dem zweiten Leitungsteil (62) angeordnet ist,
**dadurch gekennzeichnet, dass** ein Ende des zweiten Leitungsteils (62) mit zwei Rasten (623) versehen ist, die an einem Rand des Rahmens (42) befestigt sind, und das Ende des zweiten Leitungsteils (62) mit zwei Durchgangslöchern (624) versehen ist, wobei die zwei Rasten (623) gebogen sind und sich entlang eines Innenrands der zwei Durchgangslöcher (624) nach außen erstrecken.

2. Motor nach Anspruch 1, **dadurch gekennzeichnet, dass** der isolierende Träger (5) umfasst: einen Trägerkörper (52), der mit der Statoranordnung (1) verbunden ist, eine Trägerplatte (53), die an einem seitlichen Abschnitt des Trägerkörpers (52) angeordnet ist, um den Verbindungsteil (63) zu tragen, und einen Verriegelungsteil (54), der dafür ausgelegt ist, den Verbindungsteil (63) an der Trägerplatte (53) zu verriegeln und zu befestigen, wobei der erste Leitungsteil (61) an einem Ende der Trägerplatte (53) befestigt ist und die Positionierungssäule (51) von der Oberseite des Trägerkörpers (52) vorragt.

3. Motor nach Anspruch 2, **dadurch gekennzeichnet, dass** das metallische Leitungselement (6) durch Einlage-Spritzgießen am isolierenden Träger (5) befestigt ist, der Verriegelungsteil (54) zwei Seitenplatten (541), die gebogen sind und sich von zwei Seiten der Trägerplatte (53) aus erstrecken, und eine Deckplatte (542) umfasst, die zwischen den zwei Seitenplatten (541) und gegenüber einer Bodenplatte angeordnet ist, die Trägerplatte (53), die zwei Seitenplatten (541) und die Deckplatte (542) miteinander verbunden sind, um einen Aufnahmehohlraum zu bilden, und der Verbindungsteil (63) einen Packteil umfasst, der in den Aufnahmehohlraum gepackt und in ihm befestigt ist.

4. Motor nach Anspruch 3, **dadurch gekennzeichnet, dass** das metallische Leitungselement (6) an dem isolierenden Träger (5) befestigt ist und der Verriegelungsteil (54) als Raststruktur agiert, die an der Trägerplatte (53) angeordnet ist.

5. Motor nach Anspruch 4, **dadurch gekennzeichnet, dass** die Raststruktur wenigstens zwei gebogene Teile (543), die gebogen sind und jeweils an Rändern der zwei Enden der Trägerplatte (53) angeordnet sind, und eine Erhebung (544), die vom mittigen Teil der Trägerplatte (53) vorragt, umfasst, Flansche (64), die von zwei Rändern des metallischen Leitungselements (6) vorragen, gebildet sind und den gebogenen Teilen (543) entsprechen, jeder gebogene Teil (543) an dem Flansch (64) befestigt ist, ein Rastloch (65), das durch den mittigen Teil des metallischen Leitungselements (6) geht, gebildet ist und der Erhebung (544) entspricht und die Erhebung (544) mit dem Rastloch übereinstimmt.

6. Motor nach einem der Ansprüche 1 bis 5, **dadurch gekennzeichnet, dass** ein äußerer Umfang der Positionierungssäule (51) mit einem ringförmigen Vorsprung (55) versehen ist, eine ringförmige Nut (56) zwischen dem ringförmigen Vorsprung (55) und der Positionierungssäule (51) gebildet ist und die Grundplatine (2) durch den ringförmigen Vorsprung (55) getragen wird.

7. Motor nach einem der Ansprüche 1 bis 5, **dadurch gekennzeichnet, dass** die Statoranordnung (1) einen Statorkern (11), einen isolierenden Rahmen (12), der auf dem Statorkern (11) angeordnet ist, und eine Statorwicklung, die auf dem isolierenden Rahmen (12) aufgewickelt ist, umfasst, der isolierende Rahmen (12) mit einem Einführungsloch versehen ist, der isolierende Träger (5) mit einem Einführungsblock (57) versehen ist, der dem Einführungsloch entspricht und der Einführungsblock (57) durch Einführen mit dem Einführungsloch in Übereinstimmung gebracht wird.

## Revendications

1. Moteur comprenant un ensemble de stator (1), un circuit imprimé (2), et un premier support porteur (3) et un second support porteur (4) respectivement disposés sur deux faces de l'ensemble de stator (1), le moteur comprenant en outre un support isolant (5) monté sur l'ensemble de stator (1) et un élément de conduction métallique (6) fixé sur le support isolant (5) et comportant deux extrémités connectées respectivement au premier support porteur (3) et au second support porteur (4), le support isolant (5) étant pourvu d'une colonne de positionnement (51), le circuit imprimé (2) étant pourvu d'un trou de positionnement, le circuit imprimé (2) étant supporté par le support isolant (5), et la colonne de positionnement (51) étant disposée dans le trou de positionnement, l'élément de conduction métallique (6) comprenant une première pièce de conduction (61) connectées électriquement au premier support porteur (3), une seconde pièce de conduction (62) connectée électriquement au second support porteur (4), une pièce de connexion (63) connectée entre la première pièce de conduction (61) et la seconde pièce de conduction (62), la pièce de connexion (63) et la première pièce de conduction (61) étant toutes deux connectées au support isolant (5), le second support porteur (4) comprenant un manchon de support porteur (41) et un châssis (42) dépassant d'une extrémité du manchon de support porteur (41), un trou de connexion (621) conçu pour être connecté au châssis (42) par un raccord riveté ou par une vis étant disposé sur la seconde pièce de conduction (62), **caractérisé en ce qu'**une extrémité de la seconde pièce de conduction (62) est pourvue de deux boucles (623) bouclées à un bord du châssis (42) et que ladite extrémité de la seconde pièce de conduction (62) est pourvue de deux trous traversants (624), les deux boucles (623) étant courbées et étendues vers l'extérieur le long d'un bord interne des deux trous traversants (624).

2. Moteur selon la revendication 1, **caractérisé en ce que** le support isolant(5) comprend un corps support (52) connecté à l'ensemble de stator (1), une plaque support (53) disposée sur une partie latérale du corps support (52) pour supporter la pièce de connexion (63) et une pièce de verrouillage (54) conçue pour verrouiller et fixer la pièce de connexion (63) sur la plaque support (53), la première pièce de conduction (61) étant bouclée à une extrémité de la plaque support (53), et la colonne de positionnement (51) dépassant du dessus du corps support (52).

3. Moteur selon la revendication 2, **caractérisé en ce que** l'élément de conduction métallique (6) est fixé sur le support isolant (5) par moulage par injection d'insert, la pièce de verrouillage (54) comprenant deux plaques latérales (541) courbées et s'étendant depuis deux faces de la plaque support (53) et un panneau de recouvrement (542) connecté entre les deux plaques latérales (541) et opposé à une plaque de fond, la plaque support (53), les deux plaques latérales (541) et le panneau de recouvrement (542) étant assemblés pour former une cavité de logement, la pièce de connexion (63) comprenant une pièce de compactage compactée et fixée dans la cavité de logement.

4. Moteur selon la revendication 3, **caractérisé en ce que** l'élément de conduction métallique (6) est bouclé sur le support isolant (5), et la pièce de verrouillage (54) fait office de structure en boucle disposée sur la plaque support (53).

5. Moteur selon la revendication 4, **caractérisé en ce que** la structure en boucle comprend au moins deux pièces courbées (543) qui sont courbées et respectivement disposées sur des bords des deux extrémités de la plaque support (53) et un bossage (544) dépassant de la partie centrale de la plaque support (53), des brides (64) dépassant de deux bords de l'élément de conduction métallique (6) sont formés et correspondent aux pièces courbées (543), chaque pièce courbée (543) est bouclée à la bride (64), un trou de bride (65) traversant la partie centrale de l'élément de conduction métallique (6) est formé et correspond au bossage (544), le bossage (544) est adapté au trou de boucle.

6. Moteur selon l'une quelconque des revendications 1 à 5, **caractérisé en ce qu'**une périphérie extérieure de la colonne de positionnement (51) est pourvue d'une bosse annulaire (55), qu'une gorge annulaire (56) est pratiquée entre la bosse annulaire (55) et la colonne de positionnement (51), le circuit imprimé (2) étant supporté par la bosse annulaire (55).

7. Moteur selon l'une quelconque des revendications 1 à 5, **caractérisé en ce que** l'ensemble de stator (1) comprend un noyau de stator (11), un cadre isolant (12) disposé sur le noyau de stator (11) et une spire de stator enroulant le cadre isolant (12), que le cadre isolant (12) est pourvu d'un trou d'insertion, que le support isolant (5) est pourvu d'un bloc d'insertion (57) correspondant au trou d'insertion, le bloc d'insertion (57) étant apparié au trou d'insertion par insertion
